# FASCICULE DE BREVET EUROPEEN

(11) **EP 0 780 702 B1**
(45) Date de publication et mention de la délivrance du brevet: **27.03.2002**
(21) Numéro de dépôt: 96402663.7
(22) Date de dépôt: 09.12.1996
(51) Int. Cl.: G01V 1/40

(54) **Méthode et dispositif pour l'acquisition de signaux en cours de forage**
Verfahren und Vorrichtung zur Gewinnung von Signalen während des Bohrens
Method and device for signal capture while drilling

(30) Priorité: 22.12.1995 FR 9515337
(43) Date de publication de la demande: 25.06.1997
(73) Titulaire: INSTITUT FRANCAIS DU PETROLE, 92852 Rueil-Malmaison Cedex (FR)
(72) Inventeur: Naville, Charles, 91350 Grigny (FR); Mabile, Claude, 92140 Clamart (FR); Guesnon, Jean, 78400 Chatou (FR); Meynier, Patrick, 78400 Chatou (FR)

(56) Documents cités:
- GB-A- 2 273 984
- US-A- 4 216 536
- US-A- 4 829 489

## Description

La présente invention concerne une méthode et un dispositif pour acquérir une grande capacité de données physiques liées à une opération de forage dans le sous-sol. L'invention est de préférence utilisée pour enregistrer, dans le but ultérieur de traiter, les signaux sismiques créés par une source vibratoire située soit dans le puits, soit à la surface du sol. L'invention comporte l'enregistrement synchronisé des signaux vibratoires de la source et des signaux vibratoires qui ont traversé la formation géologique. On pourra déduire ainsi des connaissances géologiques par les méthodes sismiques appliquées en cours de forage, sans interférer sur les méthodes et outils de forage.

On connaît la méthode d'acquisition, notamment par le document GB-A-2 273 984, à grand débit d'informations en reliant à la surface les capteurs de fond de puits par un conducteur électrique. Cette méthode est réalisée conventionnellement par la mise en place dans l'espace intérieur de la garniture d'un câble du type "wireline" et généralement par l'usage d'un "side entry sub", c'est à dire un raccord à fenêtre latérale permettant de faire passer le câble dans l'espace annulaire, libérant ainsi la manoeuvre d'ajout de tiges de forage pour suivre l'approfondissement du forage. La présence du câble est très pénalisante dans le sens où elle oblige à abandonner la technique de forage du type rotary au profit du forage avec un moteur de fond.

On connaît également l'usage de tiges de forage spéciales dites "câblées", c'est à dire que chaque tige comporte une liaison électrique et deux connecteurs d'extrémité pour raccorder électriquement les tiges en même temps que les "tooljoints" ou raccord de tiges. La garniture de tiges entièrement constituée par ces tiges spéciales est très coûteuse et de plus la multiplicité des contacts (autant que de tiges d'environ 10 mètres de long) risque de diminuer l'isolement de la ligne électrique, ce qui pourrait limiter la capacité de transmission d'informations dans le cas de forage profond.

On connaît également, de part le document US-A-4 216 536, les transmissions par ondes de pression dans la boue de forage ou encore par ondes électromagnétiques. Avec ces techniques, le débit d'information reste faible, en tout cas incompatible avec la transmission en continu de phénomènes vibratoires, par exemple les ébranlements dus à une source sismique de fond de puits, ou encore les ébranlements émis par une source de surface de type impulsionnel en vue d'effectuer un PSV ou Profil Sismique Vertical.

Ainsi, la présente invention concerne une méthode pour l'acquisition de signaux en cours d'une opération de forage d'un puits, dans laquelle on effectue les étapes suivantes:
- on crée des ébranlements par une source vibratoire,
- on enregistre les signaux représentatifs desdits ébranlements par au moins deux moyens de mesure, l'un des moyens étant placé à la surface du sol, l'autre au sein d'une garniture utilisée pour le forage, lesdits moyens de mesure de surface étant reliés soit par onde radio, soit par liaison électrique à des moyens électroniques de contrôle en surface.
Dans la présente méthode:
- on émet un code de synchronisation par les moyens électroniques de contrôle, ledit code est enregistré avec les signaux acquis par les moyens de mesure de fond et de surface, ladite émission du code étant effectuée par ondes électromagnétiques,
- pendant un intervalle de temps, on stocke dans un module de mémorisation les signaux fournis par les moyens de mesure de fond,
- à la fin dudit intervalle de temps, on récupère à la surface du sol les signaux contenus dans le module de mémorisation,
- on effectue des ajustements de synchronisation entre les signaux de fond et de surface acquis dans le même intervalle de temps, afin de compenser la dérive de l'horloge des moyens de mesure de fond par rapport à l'horloge des moyens de mesure de surface. Les ajustements sont effectués grâce à l'enregistrement simultané, au fond et en surface, du même code de synchronisation.
- on effectue des traitements entre les signaux synchronisés de fond et de surface.

On peut récupérer à la surface du sol les signaux contenus dans le module de mémorisation en remontant le module de mémorisation à la surface.

Ladite garniture comporte un outil de forage, ledit outil en rotation pouvant constituer la source vibratoire, les moyens de mesure de surface peuvent être du type géophone reliés aux moyens de contrôle en surface et les moyens de mesure de fond du type accéléromètre détectant les ébranlements de la source.

La source vibratoire peut être à la surface du sol, les moyens de mesure de fond pouvant comporter des capteurs détectant les ébranlements traversant les terrains forés.

On peut enregistrer des signaux guidés par la garniture par des capteurs de surface placés au sommet de ladite garniture et reliés aux moyens de contrôle en surface.

On peut descendre un câble dans la garniture, ledit câble comportant un outil de liaison avec ledit module de mémorisation.

On peut relier électriquement lesdits moyens électroniques de surface et ledit module de mémorisation par l'outil de liaison.

On peut corriger la précision du synchronisme de l'acquisition des signaux de fond et des signaux de surface en enregistrant les temps d'arrivée en surface au sommet de la garniture des ondes guidées directes et des multiples de premier ordre.

L'invention concerne un dispositif pour l'acquisition de signaux en cours d'une opération de forage d'un puits comportant: une source vibratoire, des moyens de mesure de fond placés dans la garniture, des moyens de mesure de surface, lesdits moyens de mesure de surface étant reliés soit par onde radio, soit par liaison électrique à des moyens électroniques de contrôle en surface. Dans le dispositif, lesdits moyens électroniques de contrôle comportent des moyens d'émission d'un code de synchronisation des signaux acquis par les moyens de mesures de fond et de surface, lesdits moyens d'émission comportant des moyens de transmission par ondes électromagnétiques. Le dispositif comporte un module de mémorisation dans lequel sont stockés, pendant un intervalle de temps, les signaux acquis par les moyens de mesure de fond, et ledit module comporte des moyens de connexion avec les capteurs de fond et des moyens de récupération des signaux à la surface.

Dans le dispositif, les moyens de mesure de fond peuvent être reliés au module de mémorisation par un câble comportant au moins un conducteur de façon à ce que le module se trouve à une distance rapprochée de la surface, ledit module comportant des moyens de réception et d'enregistrement du code.

Le module de mémorisation peut comporter au moins un connecteur électrique enfichable dans une ambiance liquide.

L'invention peut être appliquée pour identifier les couches de terrains dans le voisinage de l'outil de forage par corrélation entre les enregistrements des signaux de surface et les enregistrements des signaux de fond stockés dans le module de mémorisation.

La présente invention sera mieux comprise et ses avantages apparaîtront plus clairement à la lecture des exemples suivants, nullement limitatifs, illustrés par les figures annexées parmi lesquelles:
- la figure 1 représente schématiquement un mode de réalisation,
- la figure 2 montre, également schématiquement, une variante, et
- les figures 3 et 4 illustrent une méthode d'ajustement de la synchronisation.

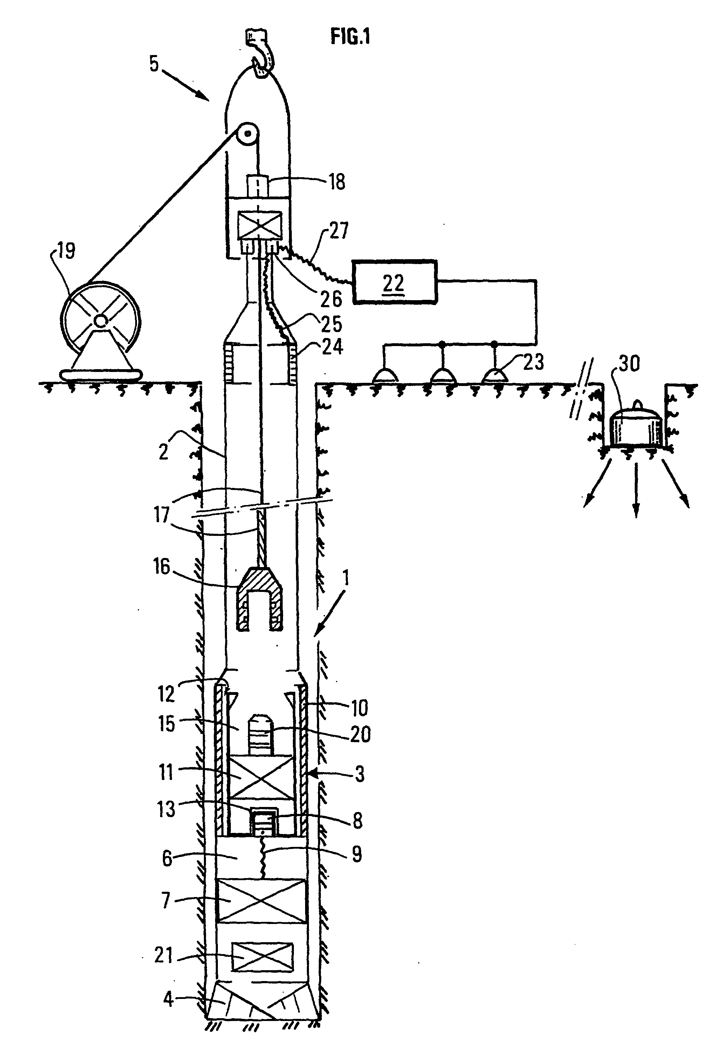

La figure 1 montre un dispositif permettant la mise en oeuvre de la présente invention selon un premier mode. Une garniture de forage 1 comporte des tiges de forage 2 à l'extrémité desquelles sont assemblées des masses-tiges 3. Un outil de forage 4 est entraîné en rotation par l'intermédiaire des masses-tiges 3, des tiges de forage 2 et d'une installation de surface 5 conventionnelle, soit par table de rotation et tige d'entraînement (kelly), non représentée ici, soit par une tête d'injection motorisée (power swivel) 5.

L'ensemble des masses-tiges 3, communément appelée "BHA", pour Bottom Hole Assembly, comporte au moins un raccord spécial 6 incluant au moins des moyens de mesure comprenant un capteur 7, par exemple du type accéléromètre, permettant l'acquisition de phénomènes vibratoires créés par le couplage de l'outil de forage avec le terrain ou par un autre moyen mécanique de couplage mécanique du capteur à la formation géologique. Ces vibrations se transmettent le long de la garniture, masses-tiges et tiges et peuvent être principalement dues aux vibrations créées par la rotation de l'outil de forage, ou par une autre source vibratoire incorporée aux masses-tiges et actionnée lorsque l'outil est posé sur le fond du puits, couplant ainsi mécaniquement la source avec le terrain. Dans un autre mode opératoire de l'invention, une source sismique 30 peut être activée à la surface du sol de façon à créer des ébranlements qui se transmettent à travers la formation géologique et peuvent être enregistrés par les moyens de mesures 7. La source vibratoire de surface peut être une source vibratoire ou une source impulsionnelle.

Le raccord 6 peut posséder des moyens de connexion 8 dans sa partie supérieure en communication avec le canal intérieur des masses-tiges vissées au-dessus. D'autres canaux conduisent le fluide de forage en direction de l'outil de forage. Les moyens de connexion 8 sont de préférence constitués par un connecteur électrique enfichable en présence de fluide, par exemple le fluide de forage en circulation. Ce type de connecteur, bien connu dans le domaine des mesures dans les puits de production de pétrole, est disponible dans le commerce. Le connecteur 8, qui peut être mono ou multicontact, est relié aux moyens de mesure, ou à l'ensemble des moyens électroniques d'acquisition, par une ou plusieurs liaisons électriques 9 qui passent dans le raccord 6. Le raccord 6 comporte dans la partie supérieure audit connecteur 8, un réceptacle 10 permettant la mise en place sur ledit connecteur d'un élément 11 de préférence cylindrique et de diamètre compatible avec ledit réceptacle et l'espace intérieur de la totalité des tubulaires constituant la garniture de forage. Une fois ledit élément 11 mis en place au dessus du raccord 6, l'espace annulaire 12, défini par l'extérieur de l'élément 11 et l'intérieur du réceptacle 10, conduit le fluide de forage vers l'outil de forage.

L'élément 11 peut comporter à sa base un connecteur 13 destiné à coopérer avec le connecteur 8 de façon à relier les moyens électroniques 14 inclus dans l'élément 1 avec le ou les capteurs 7 du raccord 6. Les moyens électroniques 14 sont principalement constitués par des modules de mémorisation des signaux acquis en cours d'opération par les capteurs 7. Les mémoires sont de quelques centaines de Mégaoctets jusqu'à plusieurs Gigaoctets, de fabrication conventionnelle, à la portée de l'ingénieur. L'élément 11 comporte également à sa partie supérieure des moyens de liaison et éventuellement de récupération 15 dont la fonction première est de pouvoir relier l'élément 11 par l'intérieur de la garniture de forage à l'aide d'un outil de liaison 16 fixé au bout d'un câble 17. Les moyens de repêchage d'un élément descendu dans l'espace intérieur d'une garniture de forage sont connus, communément appelés outils de "wireline". Dans une première configuration, le câble 17 passe à travers la tête d'injection motorisée 5 grâce à un sas d'étanchéité 18. Dans le cas général, la garniture est suspendue sur la table de rotation avant d'être dévissée au niveau du plancher de forage pour introduire dans l'espace intérieur de la garniture l'outil de liaison 16. Un treuil de wireline 19 permet de manoeuvrer l'outil de liaison pour éventuellement remonter l'élément 11 à la surface.

Les moyens de récupération 15 peuvent comporter un connecteur électrique 20 coopérant avec l'outil de repêchage 16 afin de pouvoir effectuer une liaison électrique entre les moyens de surface 22 et l'électronique de fond: moyens de mémorisation 14, capteur 7 et son électronique associée. Dans ce cas, le câble 17 n'est pas un simple câble métallique wireline, mais par exemple un câble de "logging" comportant au moins un conducteur électrique.

Le ou les raccords spéciaux 6 comportent, outre le capteur 7, des moyens de génération d'énergie électrique du type batterie ou turbine, au moins une horloge, des convertisseurs, filtres et une liaison électrique ou électromagnétique avec des moyens électromagnétiques 21 de transmission et de réception d'informations de ou vers la surface du sol, à travers le terrain. De tel moyens électromagnétiques sont déjà utilisés, notamment pour transmettre des mesures de positionnement de l'outil de forage afin de contrôler la trajectoire du forage. Ils présentent l'avantage de pouvoir très facilement envoyer des informations de la surface du sol vers une antenne de réception située près des moyens électromagnétiques 21, au fond du puits.

En surface, des moyens électroniques 22 comportent une électronique de gestion de signaux acquis par des capteurs de surface, par exemple des géophones ou accéléromètres 23, ou un raccord instrumenté 24 disposé au sommet de la garniture de forage. Ce raccord instrumenté peut comporter au moins un capteur du même type que celui référencé 7 et installé au fond du puits. Le raccord 24 est lié électriquement avec les moyens électroniques de surface 22 par une liaison électrique 25 conventionnelle, un joint à contact tournant 26 et un câble électrique 27. On ne sortira pas du cadre de la présente invention si le raccord 24 est en liaison radio avec les moyens électroniques 22. Les géophones 23 sont généralement disposés en lignes et reliés par un câble commun aux moyens électroniques de surface. Bien entendu, les conducteurs éventuels du câble 17 sont reliés aux moyens électroniques 22, notamment par l'intermédiaire d'un joint électrique tournant porté par le treuil 19. Ce système, bien connu de la technique du "logging", n'est pas représenté ici.

Les moyens électroniques de surface 22 comportent en outre des moyens de synchronisation des différents signaux acquis par les différents capteurs: moyens de mesure de surface, moyens de mesure de fond, de façon à repérer suffisamment précisément dans le temps les signaux enregistrés. Les moyens électroniques de surface 22 comportent pour cela des moyens d'émission et de commande par ondes électromagnétiques qui coopèrent avec les moyens électroniques de réception de fond 21. Par ce canal de transmission, la communication électromagnétique permet de vérifier, de commander le fonctionnement des capteurs d'acquisition 7. De plus, cette communication est avantageusement utilisée dans la présente invention pour repérer dans le temps les signaux enregistrés et stockés dans le module mémoire 11, en envoyant un code de synchronisation au début des acquisitions, ou à des intervalles de temps déterminés.

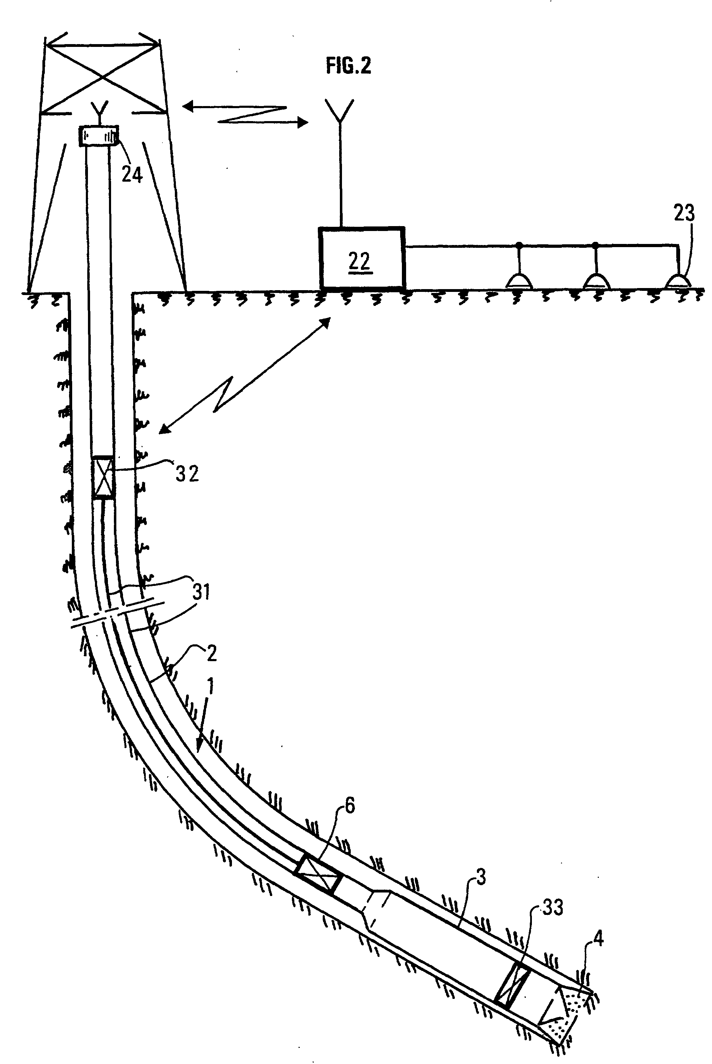

On ne sortira pas du cadre de la présente invention si le module mémoire n'est pas amovible, comme représenté sur la figure 1 avec des moyens de connexion 8, mais fixe sur ou dans le raccord 6, mais comportant cependant toujours des moyens de liaison, par exemple du type 20. Il est également clair que les ensembles électroniques 7, 21, 11 peuvent être placés , non pas au sein de la BHA, selon la définition donnée plus haut, mais au sein des tiges de forage 2. En effet, il peut être préféré de situer tout ou partie de l'électronique de fond (d'acquisition, d'alimentation, de réception, de mémorisation) à une certaine distance de l'outil de forage, c'est-à-dire plus proche de la surface. Cette disposition peut être illustrée par la figure 2.

On représente, très schématiquement sur la figure 2, les dispositions relatives des principaux moyens de l'invention: le raccord 6 comportant les moyens de mesure de fond, les moyens de mesures de surface 23, les moyens électroniques de surface 20, l'outil de forage 4, les masses-tiges 3, le module de mémorisation 32. Dans cette variante, les moyens de mesure de fond 7 ne sont pas situés au niveau des masses-tiges, mais plus haut dans les tiges. Le raccord 6 est alors adapté à se raccorder mécaniquement entre deux tiges de forage. Le couplage mécanique du capteur avec la garniture est tel que les vibrations créées par la rotation de l'outil 4, ou les ondes sismiques provenant d'une source vibratoire de surface, peuvent être détectées par le ou les capteurs du raccord 6. Un câble 31, par exemple du type câble de mesure ou "logging", relie le raccord 6 au module de mémorisation 32 fixé plus haut dans la garniture de tiges de forage. Ce module ne se limite pas simplement à de la mémoire et à son électronique associée, mais comporte également une antenne de réception des ondes électromagnétiques envoyées par le moyen de l'électronique de surface 22. D'ailleurs, il sera avantageux que ce module comporte sensiblement l'ensemble de l'électronique de mesure à l'exclusion des éléments sensibles du type capteur 7 du raccord 6.

Un moyen mécanique d'amortissement 33 est de préférence intercalé entre l'outil 4 et les moyens de mesure de fond.

La disposition selon la figure 2 peut notamment présenter les avantages de disposer les moyens de mesure à une profondeur moindre dans le puits foré, mais à une distance suffisamment proche du fond de puits pour avoir des informations géologiques sur les terrains en cours de forage. De plus, la longueur du câble 31 permet de rapprocher les moyens de mémorisation de la surface et donc d'en faciliter l'accès pour remonter les signaux enregistrés à la surface. Egalement, la réception du code de synchronisation sera plus facile puisque l'antenne (dans le module 32) est plus proche des moyens d'émission contenus dans les moyens électroniques de surface 22

Par exemple, dans le cas de forage dans des puits haute température, ou/et haute pression, l'invention pourra plus facilement être mise en oeuvre selon la disposition illustrée par la figure 2 grâce à la position des moyens de mesure de fond plus éloignée des conditions extrêmes. Il en est de même du module de mémorisation.

Le fonctionnement et l'utilisation du dispositif ci-dessus décrit peut être le suivant:

Une garniture de forage est descendue dans un puits pour approfondissement de celui-ci. La garniture comporte un module mémoire déjà en place sur le connecteur 8, s'il en est équipé. Un capteur d'accélération détecte les vibrations, de préférence dans la direction longitudinale, dues à la rotation de l'outil de forage 4 sur le front de taille ou dues à une autre source sismique. Cette autre source peut être placée au sein de la BHA, de préférence au plus près de l'outil. Dans un autre mode, proche de ce que l'on appelle PSV ou profil sismique vertical, la source vibratoire est activée en surface et le capteur de fond enregistre les ondes sismiques générées. Dans cette application, de préférence, on arrêtera la rotation et la circulation du fluide de forage pendant l'enregistrement afin de limiter les bruits, l'outil étant posé sur le front de taille, avec un faible poids. Il est clair que la présente invention s'applique à la fois à l'écoute du bruit de l'outil de forage et à l'obtention d'un profil sismique dans un puits (vertical ou non).

Les vibrations détectées par les moyens de mesure de fond, sont enregistrées dans le module mémoire, de façon brute ou après certains traitements électroniques éventuels et affectées d'un repérage dans le temps. En effet, dans le même temps que l'opérateur déclenche l'acquisition des mesures, une information, ou code, de synchronisation est envoyée par le canal des moyens de transmission électromagnétique. La même information de synchronisation est affectée aux signaux lus par les géophones 23 ou/et par les capteurs de surface, par exemple 24. Ainsi, les vibrations recueillies par les moyens de surface pourront être corrélées de façon synchrone avec les vibrations détectées par des moyens de mesure de fond. Il en est de même avec les vibrations enregistrées par les capteurs de surface 24 au sommet de la garniture de forage.

Pendant la durée de l'acquisition, le module de mémoire stocke l'information, peut être jusqu'à sensiblement atteindre la saturation. Lorsque la mémoire est pleine, les moyens électroniques de fond 21 peuvent envoyer un signal en surface par onde électromagnétique pour faire connaître à l'opérateur de surface de la nécessité de purger la mémoire. La durée d'acquisition peut aussi suffire comme indication donnée à l'opérateur pour connaître le degré de saturation de la mémoire.

L'opérateur choisit alors l'une de ces étapes opérationnelles:
- par un câble de mesure, il descend dans la garniture un outil de liaison pour coiffer le module de mémoire plein. Après liaison, les moyens électroniques de surface auxquels est raccordé le câble de mesure déclenchent le transfert des signaux stockés vers une mémoire de surface. La mémoire de fond une fois vidée est opérationnelle pour la poursuite des opérations.
- par un simple câble "wireline", c'est-à-dire sans conducteur électrique, on descend un outil de repêchage pour la récupération du module plein, selon des techniques de repêchage bien connues. Dans ce cas, le module de mémoire est équipé d'un connecteur enfichable 8, ou équivalent, pour la liaison avec le raccord 6. L'opérateur remet ensuite en place un second module, ou le même module après l'avoir copié et purgé (cette méthode est dans certains cas trop longue pour être avantageuse). La remise en place au fond d'un module vide peut se faire par descente au câble wireline, mais de préférence se fera par chute du module dans l'espace intérieur de la garniture rempli de fluide de forage. La connexion du module au capteur 7 se fait automatiquement par la coopération des connecteurs 13 et 8, comme cela est connu.

On notera que dans le cas de combinaison des deux étapes ci-dessus, on pourra vider la mémoire pour recueillir les informations en surface pendant la remontée du module, ce qui peut faire gagner du temps.

Bien entendu, la récupération des informations stockées dans la mémoire peut se faire en remontant la garniture au jour, c'est-à-dire en dévissant les tiges les unes après les autres.

Lorsque les signaux correspondant aux vibrations recueillies au fond, acquis pendant un certain intervalle de forage, seront remontés et à la disposition de l'opérateur de surface, celui ci pourra effectuer à l'aide de moyens de traitement les corrélations avec les vibrations acquises par les moyens de surface, après avoir au préalable affiné ou ajusté la synchronisation des enregistrements de fond avec les enregistrements de surface.

On notera l'usage combiné avantageux de la transmission électromagnétique pour commander, contrôler, synchroniser l'acquisition haute capacité de signaux, sans que les moyens de transmission soient dimensionnés pour transmettre un grand volume d'informations, comme celui qui peut être stocké dans le module mémoire.

Bien que l'on puisse considérer que la transmission par onde électromagnétique soit quasi instantanée, les ondes électromagnétiques que l'on utilise en forage présentent l'inconvénient d'être à fréquence basse, avec une coupure haute fréquence d'environ 5 Hz en forage et environ 10 à 20 Hz à l'arrêt. Dans le cas de mesures sismiques, il peut être préférable de pallier à cette imprécision en enregistrant sur le train de tiges, par exemple avec les moyens 24, la composante verticale de l'accélération, l'accélération de rotation, la pression de fluide de forage injecté ou une combinaison de ces mesures. On pourra corréler cette information avec le signal de fond acquis à l'aide des capteurs de fond 7. On peut ainsi obtenir la fonction de transfert du train de tiges pour différentes longueurs de la garniture. La fonction de transfert se décale dans le temps à chaque ajout de tige d'un délai mesurable et inférieur à l'erreur de synchronisation faite à l'enregistrement, et ceci à cause de la basse fréquence des ondes électromagnétiques de commande. Cette imprécision est de l'ordre du dixième de période T, soit 20 ms pour une onde de 5 Hz.

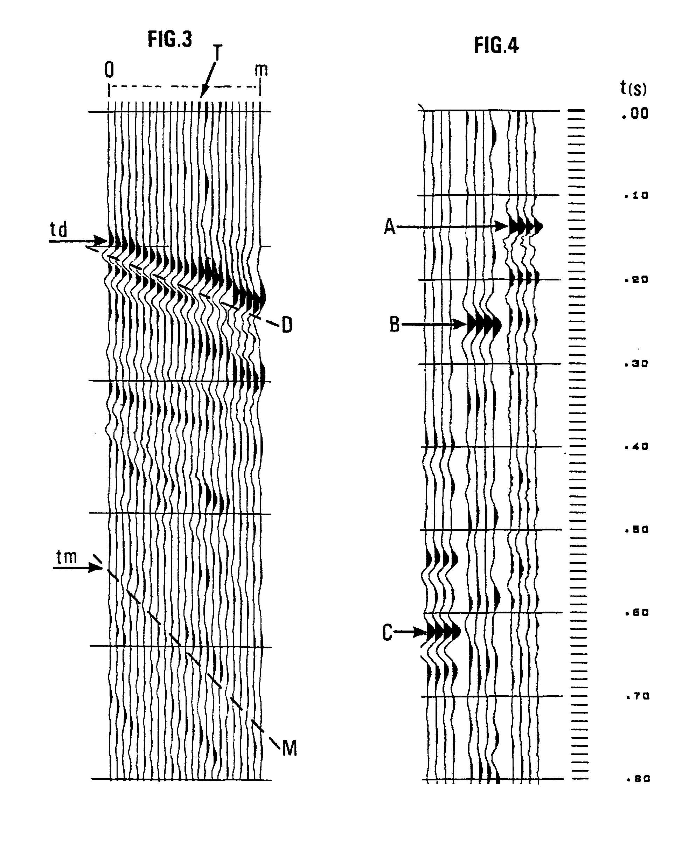

On peut minimiser cette erreur à une constante commune près, pour chaque ajout de tiges de forage à la garniture, en pointant l'arrivée de l'onde guidée directe et l'arrivée de l'onde guidée multiple de premier ordre: la différence en temps pour ce multiple correspond en effet à un trajet double entre le fond et la surface indépendant de l'erreur de synchronisation. On obtient ainsi le temps de trajet double pour deux tiges successives, la différence entre les trajets doubles correspond au trajet double dans la tige ajoutée, et par conséquent au double de la différence de trajet simple pour l'arrivée directe fond-surface. La figure 3 illustre le point précédent en représentant la fonction de transfert T pour une longueur donnée de la garniture augmentée d'une longueur de tige. On obtient ainsi la séries de signaux de 0 à n. D correspond à l'onde directe de pression dans l'acier des tiges, td étant le temps d'arrivée de l'onde directe. M correspond à l'onde guidée multiple de premier ordre et tm étant le temps d'arrivée de cette onde. Pour une longueur donnée de tiges :
tm-td=2t, t étant le temps de trajet entre le fond et la surface, à une constante près.

En effet, td=t+q et tm=3t+q, q étant l'erreur de synchronisation due à la basse fréquence de transmission électromagnétique du code de synchronisation et à la dérive de l'horloge de fond par rapport à l'horloge de surface, toutes causes cumulées.

Cette méthode est bien entendu, applicable à partir des signaux de pression longitudinale ou de torsion dans l'acier des tiges, ou de pression dans la colonne de fluide de forage injecté dans l'espace intérieur des tiges.

Comme chacune des trois ondes guidées dans les tiges (onde longitudinale ou de torsion dans l'acier des tiges, ou onde de pression dans la colonne interne de fluide de forage) ont des fréquences pouvant atteindre environ 50 Hz avec un bon rapport Signal à Bruit, on voit qu'il est ainsi possible de réduire l'erreur de synchronisation, si cela est nécessaire, dans le rapport des fréquences hautes de l'onde guidée (environ 50 Hz) et la fréquence dominante de l'onde électromagnétique (environ 5 Hz) qui module les ordres de commande et/ou de synchronisation des enregistrements, soit dans un facteur 10 environ. L'erreur finale peut ainsi être réduite à environ 1/10 de 20ms, soit 2 ms, ce qui est convenable pour exploiter les temps lus sur les signaux, en particulier pour les signaux sismiques, lors des traitements ultérieurs. La figure 4 illustre par un exemple réel les fonctions de transfert entre le fond et la surface pour les trois types d'ondes citées plus haut: ondes de pression dans l'acier des tiges (A), ondes de torsion (B) et ondes de pression dans le fluide de forage (C), obtenues par corrélation avec au moins un signal d'accélération de fond, pouvant être de même type ou d'un type différent, sur des intervalles de temps successifs de 30 secondes.

## Revendications

1. Méthode pour l'acquisition de signaux sismiques en cours d'une opération de forage d'un puits, dans laquelle on effectue les étapes suivantes:
- on crée des ébranlements par une source vibratoire,
- on acquiert les signaux représentatifs desdits ébranlements par au moins deux moyens de mesure (23; 7), l'un des moyens étant placé à la surface du sol (23), l'autre (7) au sein d'une garniture (1) utilisée pour le forage, lesdits moyens de mesure de surface étant reliés soit par onde radio, soit par liaison électrique à des moyens électroniques de contrôle en surface (22),
**caractérisée en ce que**:
- on émet un code de synchronisation par les moyens électroniques de contrôle (22), ledit code est enregistré avec les signaux acquis par les moyens de mesure de fond (7) et de surface (23) , ladite émission du code étant effectuée par ondes électromagnétiques,
- pendant un intervalle de temps, on stocke dans un module de mémorisation (11) les signaux fournis par les moyens de mesure de fond (7),
- à la fin dudit intervalle de temps, on récupère à la surface du sol les signaux contenus dans le module de mémorisation (11),
- on effectue des ajustements de synchronisation entre les signaux de fond et de surface grâce à l'enregistrement simultané du code de synchronisation au fond et en surface,
- on effectue des traitements sur les signaux synchronisés de fond et de surface.

2. Méthode selon la revendication 1, dans laquelle on récupère à la surface du sol les signaux contenus dans le module de mémorisation (11) en remontant le module de mémorisation à la surface.

3. Méthode selon l'une des revendications précédentes, dans laquelle ladite garniture comporte un outil de forage, ledit outil en rotation constituant la source vibratoire, les moyens de mesure de surface (23) sont du type géophone reliés aux moyens de contrôle en surface (22) et les moyens de mesure de fond (7) du type accéléromètre détectant les ébranlements de la source.

4. Méthode selon l'une des revendications 1 ou 2, dans laquelle la source vibratoire est à la surface du sol, les moyens de mesure de fond comportent des capteurs détectant les ébranlements traversant les terrains forés.

5. Méthode selon l'une des revendications précédentes dans laquelle des capteurs de surface (24) placés au sommet de la garniture (1) et reliés aux moyens de contrôle en surface (22), enregistrent des signaux guidés par ladite garniture.

6. Méthode selon l'une des revendications précédentes dans laquelle on descend un câble dans la garniture, ledit câble comportant un outil de liaison avec ledit module de mémorisation.

7. Méthode selon la revendication 6 dans laquelle on relie électriquement lesdits moyens électroniques de surface et ledit module de mémorisation par l'outil de liaison.

8. Méthode selon l'une des revendications précédentes dans laquelle on corrige la précision du synchronisme de l'acquisition des signaux de fond et des signaux de surface en enregistrant les temps d'arrivée en surface au sommet de la garniture des ondes guidées directes et des multiples de premier ordre, lesdites ondes étant l'une au moins des ondes guidées suivantes: ondes de pression longitudinale ou de torsion dans l'acier des tiges, ou ondes de pression dans le fluide de forage injecté dans les tiges..

9. Application de la méthode selon lune des revendications 1 à 8 pour identifier les couches de terrains dans le voisinage de l'outil de forage par corrélation entre les enregistrements des signaux de surface et les enregistrements des signaux de fond stockés dans le module de mémorisation, suivi d'un traîtement standart des signaux corrélés.

10. Dispositif pour l'acquisition de signaux sismiques en cours d'une opération de forage d'un puits , comportant une source vibratoire, des moyens de mesure de fond placés dans la garniture (2), des moyens de mesure de surface (23; 24), lesdits moyens de mesure de surface étant reliés soit par onde radio, soit par liaison électrique à des moyens électroniques de contrôle en surface (22), **caractérisé en ce que** lesdits moyens électroniques de contrôle comportent des moyens d'émission d'un code de synchronisation des signaux qui sont acquis par les moyens de mesures de fond (7) et de surface (23; 24), lesdits moyens d'émission comportant des moyens de transmission par ondes électromagnétiques, **en ce que** le dispositif comporte un module de mémorisation (11) pour stocker, pendant un intervalle de temps, le code de synchronisation avec les signaux acquis par les moyens de mesure de fond (7), et **en ce que** ledit module comporte des moyens de connexion avec les moyens de mesure de fond et des moyens de recupération en surface desdits signaux.

11. Dispositif selon la revendication 10 dans lequel lesdits moyens de mesure de fond sont reliés au module de mémorisation par un câble comportant au moins un conducteur et disposé de façon telle que ledit module se trouve à une distance rapprochée de la surface par rapport aux dits moyens de mesure de fond, ledit module comportant des moyens de réception et d'enregistrement du code.

12. Dispositif selon l'une des revendications 10 ou 11 dans lequel le module de mémorisation comporte au moins un connecteur électrique enfichable dans un environnement liquide.

## Patentansprüche

1. Verfahren zur Erfassung seismischer Signale im Laufe der Bohrung eines Bohrloches, in welchem die folgenden Schritte durchgeführt werden :
- Erschütterungen werden mittels einer Vibrationsquelle erzeugt,
- die aus den besagten Erschütterungen folgenden Signale werden mittels wenigstens zwei Meßmittel (23 ; 7) erfaßt, wobei eines der Mittel auf dem Erdboden (23) und das andere (7) in einer Bohrstangengarnitur (1) aufgestellt ist, und die besagten Oberflächenmeßmittel sind entweder mittels Radiowellen oder mittels einer elektrischen Verbindung mit an dem Erdboden angeordneten elektronischen Kontrollmitteln (22) verbunden,
**dadurch gekennzeichnet, daß** :
- ein Synchronisierungscode mittels den elektronischen Kontrollmitteln (22) ausgesendet wird, der besagte Code wird mit den durch die im Bohrloch (7) und auf dem Erdboden (23) angeordneten Meßmittel erfaßten Signale aufgezeichnet, wobei die besagte Codeaussendung mittels elektromagnetischen Wellen erfolgt,
- während einer Zeitspanne die mittels den im Bohrloch angeordneten Meßmittel (7) gelieferten Signale in einem Speichermodul (11) gespeichert werden,
- am Ende der besagten Zeitspanne die im Speichermodul (11) gespeicherten Signale am Erdboden erhalten werden,
- Synchronisationseinstellungen zwischen den im Bohrloch und am Erdboden erfaßten Signalen mittels gleichzeitiger Aufnahme des Synchronisierungscodes im Bohrloch und am Erdboden durchgeführt werden,
- die im Bohrloch und am Erdboden erfaßten synchronisierten Signale verarbeitet werden.

2. Verfahren gemäß Anspruch 1, in welchem die sich im Speichermodul (11) befindenden Signale am Erdboden erhalten werden, indem der Speichermodul auf den Erdboden zurück gebracht wird.

3. Verfahren gemäß irgendeinem der vorstehenden Ansprüche, in welchem die besagte Bohrgarnitur ein Bohrwerkzeug enthält, wobei das besagte Bohrwerkzeug die Vibrationsquelle darstellt, die sich auf dem Erdboden befindenden Meßmittel (23) von Geophon-Typ sind mit den an dem Erdboden angeordneten Kontrollmitteln (22) verbunden und die im Bohrloch angeordneten Meßmittel (7) von Accelerometer-Typ erfassen die mittels der Vibrationsquelle erzeugten Erschütterungen.

4. Verfahren gemäß einem der Ansprüche 1 oder 2, in welchem die Vibrationsquelle sich am Erdboden befindet, und die sich im Bohrloch befindenden Meßmittel betragen Meßfühler, die die sich durch die gebohrten Formationen ausbreitenden Erschütterungen erfassen.

5. Verfahren gemäß irgendeinem der vorstehenden Ansprüche, in welchem am Erdboden angeordnete Meßfühler (24), die sich an der Spitze der Garnitur (1) befinden und mit den am Erdboden angeordneten Kontrollmitteln (22) verbunden sind, die durch die besagte Garnitur geführten Signale aufnehmen.

6. Verfahren gemäß irgendeinem der vorstehenden Ansprüche, in welchem ein Kabel in die Garnitur heruntergeleitet wird, wobei das besagte Kabel ein Verbindungswerkzeug zur Verbindung mit dem besagten Speichermodul beträgt.

7. Verfahren gemäß Anspruch 6, in welchem die besagten am Erdboden angeordneten elektronischen Mittel und das besagte Speichermodul durch das Verbindungswerkzeug elektrisch miteinander verbunden sind.

8. Verfahren gemäß irgendeinem der vorstehenden Ansprüche, in welchem die Synchronismusgenauigkeit der Erfassung der im Bohrloch und am Erdboden erfaßten Signale korrigiert wird, indem die Eingangszeiten der geleiteten Bodenwellen und der Vielfache von 1. Ordnung an der Spitze der Garnitur erfaßt werden, die besagten Wellen sind mindestens eine der folgenden geleiteten Wellen : Längsdruckwellen oder Torsionswellen im Stahl der Stangen, oder Druckwellen in dem durch die Stangen injizierten Bohrfluid.

9. Anwendung des Verfahrens gemäß irgendeinem der Ansprüche 1 bis 8 zur Identifizierung der Bodenschichten in der Umgebung des Bohrwerkzeuges durch Korrelation zwischen den Aufnahmen der am Erdboden und im Bohrloch erfaßten und im Speichermodul gespeicherten Signale, gefolgt von einer Standardverarbeitung der korrelierten Signale.

10. Vorrichtung zur Erfassung seismischer Signale im Laufe der Bohrung eines Bohrloches, die eine Vibrationsquelle, in der Garnitur (1) angeordnete Meßmittel und auf dem Erdboden angeordnete Meßmittel (23 ; 24) beträgt, wobei die besagten Oberflächenmeßmittel entweder mittels Radiowellen oder mittels einer elektrischen Verbindung mit an dem Erdboden angeordneten elektronischen Kontrollmitteln (22) verbunden sind, **dadurch gekennzeichnet, daß** die besagten elektronischen Kontrollmittel Mittel zur Aussendung eines Synchronisierungscodes zur Synchronisierung der durch die im Bohrloch (7) und auf dem Erdboden (23 ; 24) angeordneten Meßmittel erfaßten Signale betragen, wobei die besagten Aussendungsmittel Mittel zur Übertragung mittels elektromagnetischer Wellen betragen, daß die Vorrichtung ein Speichermodul (11) zur Speicherung, während einer Zeitspanne, des Synchronisierungscodes mit den mittels den im Bohrloch angeordneten Meßmittel (7) gelieferten Signale beträgt, und daß das besagte Modul Mittel zur Verbindung mit den im Bohrloch angeordneten Meßmitteln und Mittel zum Erhalten der besagten Signale auf dem Erdboden beträgt.

11. Vorrichtung gemäß Anspruch 10, in welcher die besagten im Bohrloch angeordneten Meßmittel mit dem Speichermodul mittels eines Kabels mit wenigstens einem Leiter verbunden und so angeordnet sind, daß das besagte Modul sich in geringer Entfernung von dem Erdboden im Vergleich zu den besagten im Bohrloch angeordneten Meßmitteln befindet, wobei das besagte Modul Code-Empfang- und Aufnahmemittel beträgt.

12. Vorrichtung gemäß irgendeinem der Ansprüche 10 oder 11, in welcher das Speichermodul wenigstens einen in eine flüssige Umgebung einsteckbaren elektrischen Verbinder beträgt.

## Claims

1. A method intended for acquisition of seismic signals during a well drilling operation, wherein the following stages are carried out:
- shakes are created by a vibrational source,
- signals representative of said shakes are acquired by at least two measuring means (23; 7), one of the means (23) being placed at the ground surface, the other (7) in a string (1) used for drilling, said surface measuring means being connected, either by radio wave or by electric link, to surface electronic control means (22),
**characterized in that**:
- a synchronization code is emitted by electronic control means (22), said code is recorded with the signals acquired by downhole (7) and surface measuring means (23), said code emission being achieved by electromagnetic waves,
- during a time interval, the signals provided by downhole measuring means (7) are stored in a storage module (11),
- at the end of said time interval, the signals contained in storage module (11) are recovered at the ground surface,
- synchronization adjustments are performed between the downhole signals and the surface signals by simultaneously recording the synchronization code downhole and at the surface,
- processing operations are carried out on the synchronized downhole and surface signals.

2. A method as claimed in claim 1, wherein the signals contained in storage module (11) are recovered at the ground surface by taking the storage module up to the surface.

3. A method as claimed in any one of the previous claims, wherein said string comprises a drill bit, said rotating bit forming the vibrational source, surface measuring means (23) are of the geophone type connected to surface control means (22) and downhole measuring means (7) of the accelerometer type detect the shakes generated by the source.

4. A method as claimed in any one of claims 1 or 2, wherein the vibrational source lies at the ground surface, the downhole measuring means include pickups detecting the shakes that cross the drilled formations.

5. A method as claimed in any one of the previous claims, wherein signals guided by string (1) are recorded by surface pickups (24) situated at the top of said string and connected to surface control means (22).

6. A method as claimed in any one of the previous claims, wherein a cable is lowered into the string, said cable comprising a connecting tool for connection with said storage module.

7. A method as claimed in claim 6, wherein said surface electronic means and said storage module are connected electrically by means of the connecting tool.

8. A method as claimed in any one of the previous claims, wherein the precision of the synchronism of acquisition of the downhole signals and of the surface signals is corrected by recording the times of arrival at the surface, at the top of the string, of the direct guided waves and of the first order multiples, said waves being at least one of the guided waves as follows : longitudinal pressure or shear waves in the steel of the pipes, or pressure waves in the drilling fluid injected in the pipes.

9. Application of the method as claimed in any one of claims 1 to 8 to identify the formation layers in the neighbourhood of the drill bit by correlation between the surface signal records and the downhole signal records stored in the storage module, followed by standard processing of the correlated signals.

10. A device intended for acquisition of seismic signals during a well drilling operation, comprising a vibrational source, downhole measuring means placed in string (2), surface measuring means (23; 24), said surface measuring means being connected, either by radio wave or by electric link, to surface electronic control means (22), **characterized in that** said electronic control means comprise means for emitting a synchronization code for the signals acquired by downhole (7) and surface measuring means (23; 24), said emission means comprising means of transmission by electromagnetic waves, **in that** the device comprises a storage module (11) for storing, during a given time interval, the synchronization code with the signals acquired by downhole measuring means (7), and **in that** said module comprises means of connection with the downhole measuring means and means for recovering said signals at the surface.

11. A device as claimed in claim 10, wherein said downhole measuring means are connected to the storage module by a cable comprising at least one conductor and arranged in such a way that said module is at a short distance from the surface in relation to said downhole measuring means, said module comprising code reception and recording means.

12. A device as claimed in any one of claims 10 or 11, wherein the storage module comprises at least one electric connector that can be plugged in in a liquid environment.
